# EUROPEAN PATENT SPECIFICATION

(11) **EP 2 551 068 B1**
(45) Date of publication and mention of the grant of the patent: **04.04.2018**
(21) Application number: 12004677.6
(22) Date of filing: 21.06.2012
(51) Int. Cl.: B25J 9/04, B25J 19/00

(54) **SCARA ROBOT WITH A HOLLOW SPINDLE WHICH MOVES VERTICALLY**
SCARA-ROBOTER MIT EINER HOHLEN SPINDEL, DIE SICH VERTIKAL BEWEGT
ROBOT DE TYPE SCARA AVEC UN ARBRE CREUX QUI SE DÉPLACE VERTICALEMENT

(30) Priority: 25.07.2011 JP 2011162293
(43) Date of publication of application: 30.01.2013
(73) Proprietor: Yamaha Hatsudoki Kabushiki Kaisha, Shizuoka-ken 438-8501 (JP)
(72) Inventor: Manome, Toshifumi, Iwata-shi Shizuoka-ken 438-8501 (JP)
(74) Representative: Müller-Boré & Partner Patentanwälte PartG mbB

(56) References cited:
- JP-A- 10 006 272
- JP-A- 2011 051 035
- JP-U- 60 036 193
- US-A- 4 518 298
- US-A- 5 205 701

## Description

The present invention relates to a selective compliance assembly robot arm (SCARA) robot in which a hollow operating spindle is provided at a tip end of an arm capable of rotating in a horizontal direction (rotating perpendicularly axially) so as to be able to move in a vertical direction, and in which a striate member including an electric wires is inserted into the operating spindle.

SCARA robots with arms and operating spindles have conventionally been used in mounting electronic components. Among these SCARA robots, there is a SCARA robot that has a hollow operating spindle, and a wire and a pipe are disposed inside the operating spindle so as not to interfere with a movement of the arm (Japanese Patent Application Publication No. 2001-277178, for example). This robot has a robot column having a robot platform, a first arm that is provided at an upper end of the robot column, in a manner as to be able to rotate in a horizontal direction (to rotate perpendicularly axially), and a second arm that is provided at a tip end of the first arm, in a manner as to be able to rotate in the horizontal direction. A tip end of the second arm is provided with an attachment shaft, and a hollow robot spline shaft capable of moving vertically and rotating is installed inside the attachment shaft.

Furthermore, an air manifold with a solenoid valve, a remote-terminal-controlled printed board, and a hand or a tool that is operated by compression air, are attached to a lower part of the robot spline shaft. A cable or an air pipe that extends from the robot column through the second arm is inserted from an upper end opening of the robot spline shaft into the robot spline shaft and pulled out of a lower end opening of the robot spline shaft to the outside.

A tip end of the cable is connected to a terminal of the remote-terminal-controlled printed board, and a tip end of the air pipe is connected to a connecting port of the air manifold.

The robot spline shaft of the conventional SCARA robot described above needs to be replaced when damaged. In so doing, first, the cable and the air pipe need to be pulled out of the robot spline shaft, and then the robot spline shaft needs to be removed. After attaching a new robot spline shaft, the cable and the air pipe are passed through the robot spline shaft. Thus, replacing the robot spline shaft requires effort and time. Moreover, attaching/detaching the tip end of the cable to/from the terminal of the remote-terminal-controlled printed board and attaching/detaching the tip end of the air pipe to/from the connecting port of the air manifold also need to be performed, which requires more effort and time.

US 5 205 701 A discloses an industrial robot, wherein a bundle of wiring and piping lines, for supplying a control signal and working a first arm from a control unit to a hand, passes through a first flexible pipe, one end of which is connected onto a fixing jig attached to a base unit and the other end of which is connected onto a second arm, a second flexible pipe, one end of which is connected onto the second arm and the other end of which is connected onto a hollow vertical third arm, and the third arm. One end of the bundle is connected to the control unit and the other end thereof is connected to the hand. The third arm is connected to the second arm via a fixing jig. A pair of connectors are arranged within the fixing jig for detachably coupling the wiring line and the piping line, respectively.

An object of the present invention is to provide a SCARA robot that allows an easy replacement of its operating spindle.

A SCARA robot according to one aspect of the present invention has an arm that extends in a horizontal direction and is capable of rotating perpendicularly axially around a rotation central part located in one end part in a longitudinal direction of the arm, an operating spindle assembly that is provided detachably to the other end part in the longitudinal direction of the arm, and an external striate member connected to the operating spindle assembly, wherein the operating spindle assembly includes a hollow operating spindle that moves in a vertical direction with respect to the arm, and an internal striate member which is disposed inside the operating spindle and retained in the operating spindle and to which the external striate member is detachably connected, wherein the operating spindle assembly further has a connecting member attached to an end part of the operating spindle for relaying the internal striate member and the external striate member, wherein the internal striate member includes an internal wire formed of an electric wire, and the external striate member includes an external wire formed of an electric wire and connected detachably to the internal wire, and wherein the connecting member includes a bush flange provided at an upper end or a lower end of the operating spindle and a wire connector which has an external connector section projecting to the outside of the operating spindle and an internal connector section positioned on the inside of the operating spindle, the connecting member being connected to the operating spindle by being screwed or press-fitted, the wire connector being retained in a vertical communicating hole of the bush flange, one of the external connector section and the internal connector section extending above the bush flange and the other one of the external connector section and the internal connector section extending below the bush flange, the external connector section being connected to the external wire and the internal connector section being connected to the internal wire.

According to this SCARA robot, when replacing the operating spindle, the external striate member and the internal striate member are disconnected from each other, and the operating spindle assembly (en masse, the operating spindle and the internal striate member) is removed from the arm. A new operating spindle assembly is attached to the arm, and then the external striate member and the internal striate member are connected to each other. In this manner, the operating spindle can be replaced easily.
Fig. 1 is a perspective view showing a SCARA robot according to a first embodiment of the present invention;
Fig. 2 is a perspective view showing a state in which an operating spindle of the SCARA robot shown in Fig. 1 is lowered;
Fig. 3 is a cross-sectional diagram showing the inside of the SCARA robot;
Fig. 4 is a cross-sectional diagram showing an operating spindle assembly;
Fig. 5 is a perspective view showing the operating spindle to which a Z-axis ball screw nut and an R-axis ball spline nut are attached;
Fig. 6 is a cross-sectional diagram showing the operating spindle to which the Z-axis ball screw nut and the R-axis ball spline nut are attached;
Fig. 7 is a cross-sectional diagram showing an enlarged image of the inside of a cover of the SCARA robot;
Fig. 8 is a perspective view showing a state in which an external wire and an external pipe are fixed to an upper end connecting member of the operating spindle;
Fig. 9 is a perspective view showing a state in which tip end parts of the external wire and the external pipe are brought close to the upper end connecting member of the operating spindle;
Fig. 10 is a perspective view showing a state in which the tip end parts of the external wire and the external pipe are connected to the upper end connecting member of the operating
   spindle;
Fig. 11 is a perspective view showing a state in which base end parts of the external wire and the external pipe are brought close to a lower end connecting member of the operating spindle;
Fig. 12 is a perspective view showing a state in which the base end parts of the external wire and the external pipe are connected to the lower end connecting member of the operating spindle;
Fig. 13 is a perspective view showing a SCARA robot according to a second embodiment of the present invention;
Fig. 14 is a cross-sectional diagram showing the inside of the SCARA robot shown in Fig. 13;
Fig. 15 is a perspective view showing a state in which a connector of the external wire is brought close to a wire connector of the upper end connecting member;
Fig. 16 is a perspective view showing a state in which the connector of the external wire is connected to the wire connector of the upper end connecting member;
Fig. 17 is a perspective view showing a state in which the external wire and a continuous pipe are fixed to an upper surface of the upper end connecting member by a stay;
Fig. 18 is a perspective view showing a state in which the connector of the external wire is brought close to a wire connector of a lower end connecting member;
Fig. 19 is a perspective view showing a state in which the connector of the external wire is connected to the wire connector of the lower end connecting member; and
Fig. 20 is a perspective view showing a state in which a tip end part of the continuous pipe that is pulled out of a lower through-hole to the outside is connected to a work device attached to a hand.

Embodiments of the present invention are described hereinafter with reference to the drawings.

### (First Embodiment)

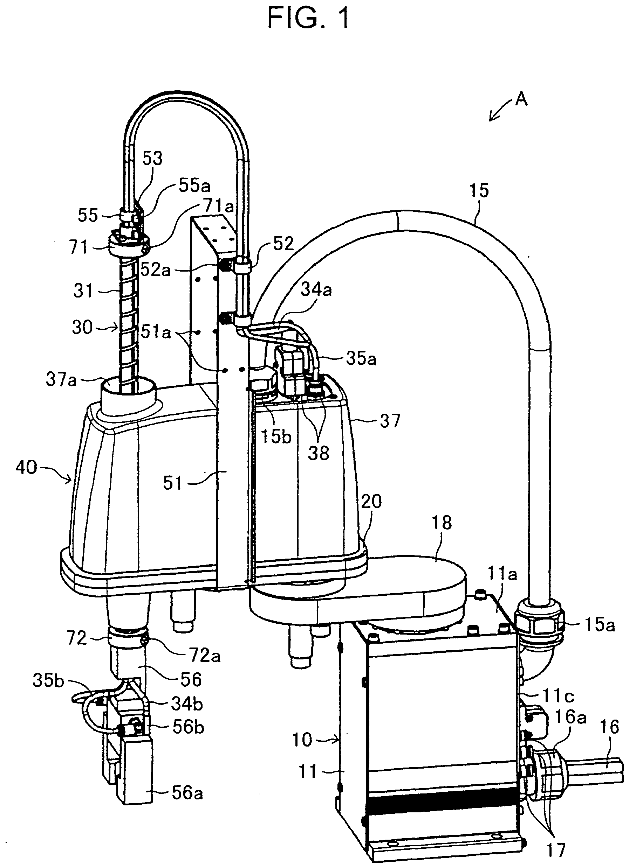

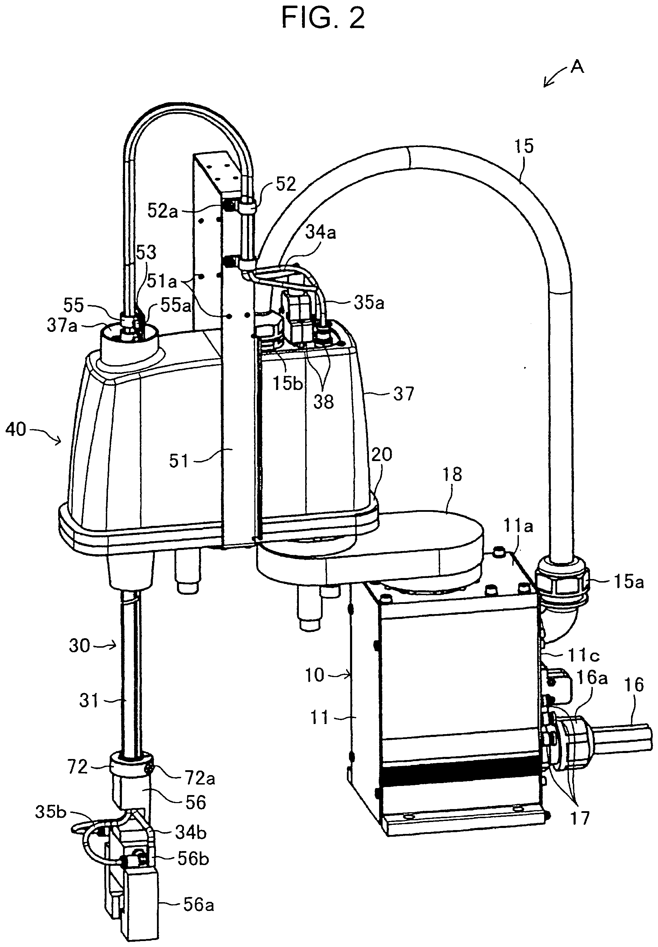

A SCARA robot according to a first embodiment of the present invention is described hereinafter with reference to the drawings. Figs. 1 and 2 each show a SCARA robot A according to the embodiment. The SCARA robot A has a base part 10, a first arm 18, a second arm 20, an operating spindle assembly 30, and a lifting/lowering rotary drive device 40 provided in the second arm 20 and for moving the operating spindle assembly 30.

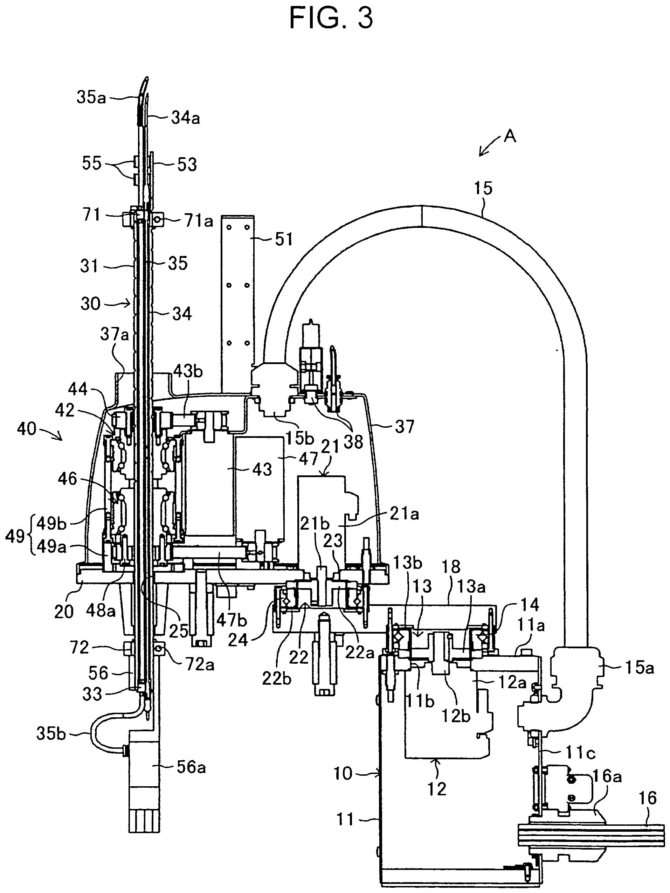

The base part 10 is fixedly installed on a floor, a platform or the like, and, as shown in Fig. 3, has a rectangular box-shaped case 11, a motor 12 fixed to an upper part within the case 11, and a speed reducer 13 that is fitted to an upper part of the motor 12 and fixed to an upper surface part 11a of the case 11. In the following description, a vertical direction and a lateral direction are described with reference to Fig. 3.

An attachment hole 11b is formed in a left-side section of the upper surface part 11a of the case 11. The motor 12 and the speed reducer 13 are attached to the upper surface part 11a via the attachment hole 11b. The motor 12 is configured by a rotary shaft 12b supported rotatably on a motor case 12a by a bearing, a rotor provided on an outer circumference of the rotary shaft 12b, and a stator, a rotation detection resolver and the like disposed facing an outer circumference of the rotor. The motor 12 is fitted to the case 11 by being coupled to an input part 13a of the speed reducer 13, described hereinafter, in a manner that the rotary shaft 12b is directed upward such that the attachment hole 11b is pierced from bottom up, and, in this state, fixing the motor case 12a to a lower surface of the upper surface part 11a.

The speed reducer 13 is known as a harmonic drive (registered trademark) . Although the detail is omitted, the speed reducer 13 has the input part 13a coupled to the rotary shaft 12b of the motor 12, and an output part 13b coupled to the first arm 18. An outer circumference of a cylinder section of the output part 13b is provided with a bearing 14. The first arm 18 is supported by the case 11 so as to be able to rotate via the bearing 14. In this configuration, a drive force of the motor 12 is transmitted to the first arm 18 via the rotary shaft 12b, the input part 13a and the output part 13b, while the speed of the rotary movement is reduced.

A base end part of a cable 15 extending toward a cover 37, described hereinafter, is fixed to an upper part of a right-side surface part 11c of the case 11 by an attachment member 15a. The cable 15 is flexible and accommodates therein various wires, a suction pipe and the like. A lower part of the right-side surface part 11c of the case 11 is provided with a wire connector 16a for connecting the various wires provided within the case 11 to a wire 16 provided outside the case 11, and a pipe joint 17 for connecting a suction pipe and the like provided within the case 11 to a pipe provided outside the case 11 (not shown). In the case 11, the wire connector 16a and the wires provided within the cable 15 are connected to each other and the pipe joint 17 and the pipe provided within the cable 15 are connected to each other.

The first arm 18 is shaped into an oval plate. An attachment concave part is formed in a right-side section of a lower surface of the first arm 18, and the output part 13b of the speed reducer 13 is fixed to the attachment concave part. Similarly, an attachment concave part is formed in a left-side section of an upper surface of the first arm 18, and a speed reducer 22 is attached to this attachment concave part. The second arm 20 is attached to the first arm 18 via the speed reducer 22.

The second arm 20 is shaped into an oval plate, and an attachment hole 23 is pierced vertically through a right-side section of the second arm 20. A motor 21 is disposed downward in a manner that a rotary shaft 21b is pierced from top down through the attachment hole 23, and, in this state, a motor case 21a is fixed to an upper surface of the second arm 20. In this manner, the motor 21 is fitted to the second arm 20. The motor 21 has the same configuration as the abovementioned motor 12, except that the position of the motor 21 is opposite to the position of the motor 12 in the vertical direction. Note that, in the present embodiment, the second arm 20 corresponds to the arm of the present invention, and the attachment hole 23 of the second arm 20 corresponds to the rotation central part of the present invention.

Except that the position of the speed reducer 22 is opposite to the position of the speed reducer 13 in the vertical direction, the speed reducer 22 has the same configuration as the abovementioned speed reducer 13, and has an input part 22a to which the rotary shaft 21b of the motor 21 is coupled, and an output part 22b to which the first arm 18 is coupled. The speed reducer 22 transmits a rotary movement of the rotary shaft 21b of the motor 21 to the first arm 18 while reducing the speed of the rotary movement.

The second arm 20 is supported by the first arm 18 so as to be able to rotate via a bearing 24 provided on an outer circumference of a cylinder section of the output part 22b. A drive force of the motor 21 is transmitted to the first arm 18 via the rotary shaft 21b, the input part 22a and the output part 22b. An attachment hole 25 to which the operating spindle assembly 30 is inserted is formed in a left-side section of the second arm 20, the operating spindle assembly 30 being described hereinafter.

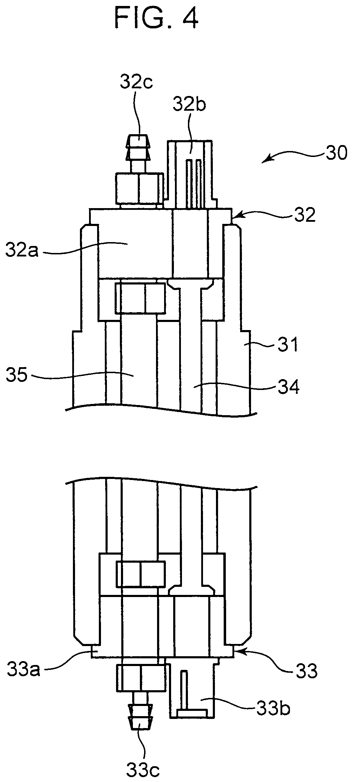

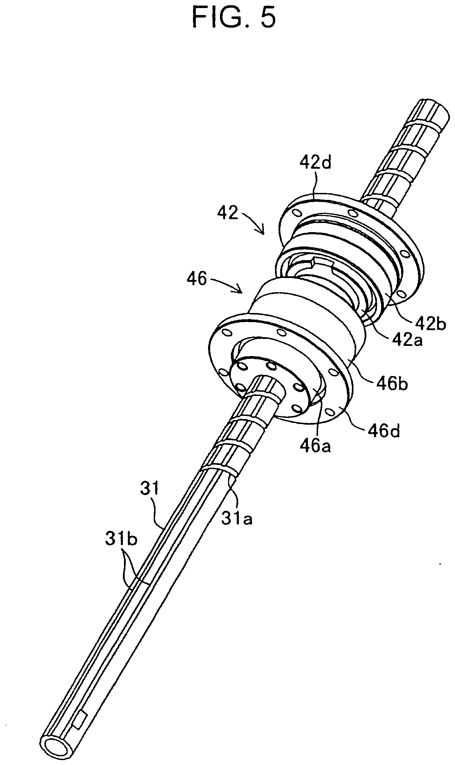

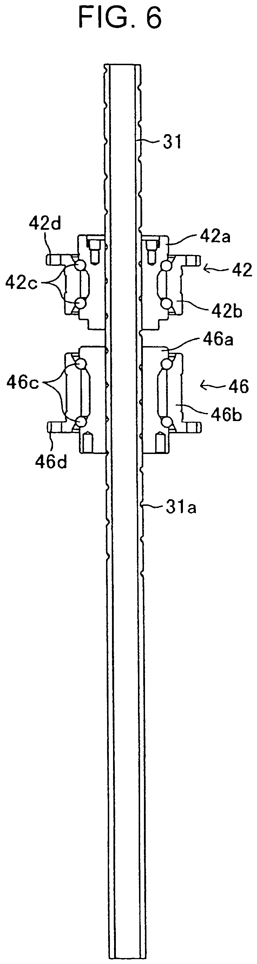

As shown in Fig. 4, the operating spindle assembly 30 has a hollow operating spindle 31, an upper end connecting member 32 attached to an upper end opening part of the operating spindle 31, a lower end connecting member 33 attached to a lower end opening part of the operating spindle 31, and an internal wire 34 (internal striate member) and an internal pipe 35 (internal striate member) that are disposed on the inside of the operating spindle 31 so as to be positioned between the upper end connecting member 32 and the lower end connecting member 33 and are connected to the upper end connecting member 32 and the lower end connecting member 33 respectively. The operating spindle 31 is configured by a hollow, steel ball screw ball spline shaft, as shown in Figs. 5 and 6. A ball screw groove 31a extending axially in a spiral manner, and a plurality of ball spline grooves 31b extending axially parallel to each other, are formed on an outer circumferential surface of the operating spindle 31.

The upper end connecting member 32 has a thick disk-shaped bush flange 32a that has a plurality of vertically communicating hole parts in the middle, and a wire connector 32b and a pipe joint 32c that are retained by the bush flange 32a while being disposed inside the hole parts. The wire connector 32b has connector sections thereabove and therebelow, and, similarly, the pipe joint 32c has joint sections thereabove and therebelow. The wire connector 32b and the pipe joint 32c are retained by the bush flange 32a, in a manner that the upper connector section and joint section project to the outside of the operating spindle 31, as shown in Fig. 4. Note that, of the connector sections of the wire connector 32b and the joint sections of the pipe joint 32c, the sections positioned on the inside of the operating spindle 31 are covered with the internal wire 34 and the internal pipe 35 and therefore not shown in Fig. 4.

The lower end connecting member 33 has a thick disk-shaped bush flange 33a that has a plurality of vertically communicating hole parts in the middle, and a wire connector 33b and a pipe joint 33c that are retained by the bush flange 33a while being disposed inside the hole parts. The wire connector 33b has connector sections thereabove and therebelow, and, similarly, the pipe joint 33c has joint sections thereabove and therebelow. The wire connector 33b and the pipe joint 33c are retained by the bush flange 33a, in a manner that the upper connector section and joint section project to the outside of the operating spindle 31, as shown in Fig. 4. Note that, of the connector sections of the wire connector 33b and the joint sections of the pipe joint 33c, the sections positioned on the inside of the operating spindle 31 are covered with the internal wire 34 and the internal pipe 35 and therefore not shown in Fig. 4.

The upper end connecting member 32 and the lower end connecting member 33 are fixed to the operating spindle 31 by being screwed or press-fitted to the operating spindle 31, in a manner that the wire connector 32b and the wire connector 33b face each other vertically and that the pipe joint 32c and the pipe joint 33c face each other vertically. Furthermore, on the inside of the operating spindle 31, both end parts of the internal wire 34 are connected to the wire connectors 32b, 33b, and both end parts of the internal pipe 35 are connected to the pipe joints 32c, 33c. Note that the upper end connecting member 32 and the lower end connecting member 33 may be attached to the operating spindle 31 by being screwed to the operating spindle 31, in which case it is preferred that the directions of the screws be opposite to each other so that the internal wire 34 and the internal pipe 35 are not twisted.

As shown in Figs. 5 and 6, a Z-axis ball screw nut 42 and an R-axis ball spline nut 46 of the lifting/lowering rotary drive device 40, described hereinafter, are attached to the operating spindle 31. A plurality of steel balls are retained on an inner surface of the Z-axis ball screw nut 42, and the Z-axis ball screw nut 42 is fitted to the operating spindle 31 while the steel balls are engaged with the ball screw groove 31a. Also, a plurality of steel balls are retained on an inner surface of the R-axis ball spline nut 46, and the R-axis ball spline nut 46 is fitted to the operating spindle 31 while the steel balls are engaged with the ball spline grooves 31b.

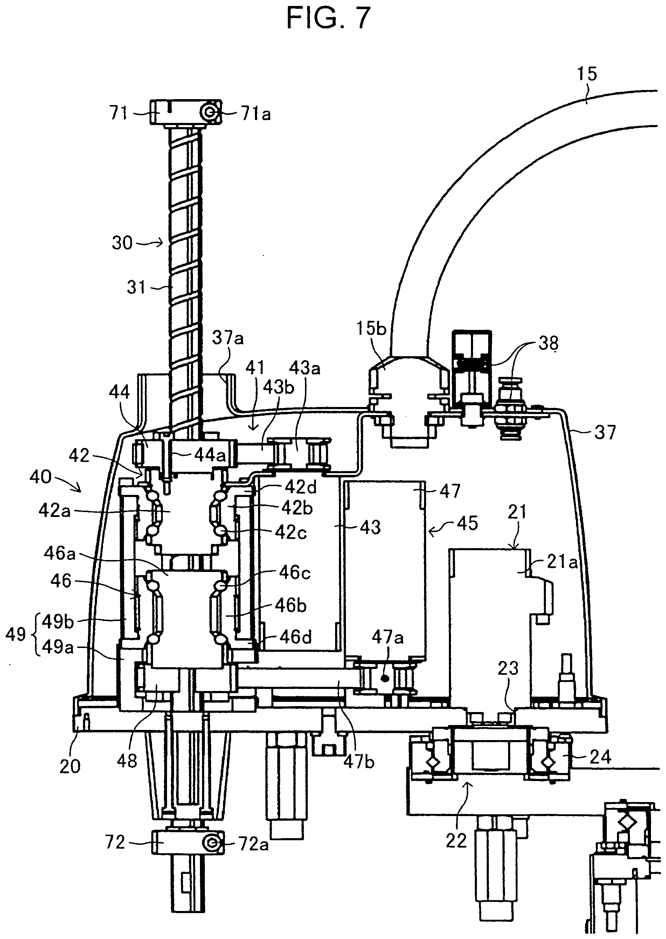

The lifting/lowering rotary drive device 40 moves the operating spindle assembly 30 in the vertical direction and rotates the operating spindle assembly 30 around the shaft. As shown in Fig. 7, the lifting/lowering rotary drive device 40 is provided over a central part and the left-side section on the upper surface of the second arm 20. The upper side and circumference of the lifting/lowering rotary drive device 40 are surrounded by the cover 37 provided on the upper surface of the second arm 20. The lifting/lowering rotary drive device 40 has a Z-axis drive device 41, an R-axis drive device 45, and a support spacer 49. An insertion hole 37a is formed in a section on the left side of an upper surface of the cover 37, the section being located above the attachment hole 25 of the second arm 20. The operating spindle assembly 30 is inserted perpendicularly into the attachment hole 25, and an upper end part of the operating spindle assembly 30 extends to the outside of the cover 37 through the insertion hole 37a.

The Z-axis drive device 41 has the Z-axis ball screw nut 42, a Z-axis motor 43, a pulley 44 provided in an outer circumference of the operating spindle assembly 30 while being coupled to the Z-axis ball screw nut 42, a pulley 43a provided on a rotary shaft of the Z-axis motor 43, and a timing belt 43b wrapped around the pulleys 43a, 44.

The Z-axis motor 43 is disposed, with the rotary shaft thereof directed upward, and the pulleys 43a, 44 and the timing belt 43b are disposed in a manner as to extend horizontally (laterally) in a left upper part inside the cover 37. When the Z-axis motor 43 is operated, its drive force is transmitted from the rotary shaft thereof to the Z-axis ball screw nut 42 via the pulley 43a, the timing belt 43b and the pulley 44.

The Z-axis ball screw nut 42 is configured by a ball bearing composed of an inner race 42a, an outer race 42b, and a plurality of ball-shaped rolling elements 42c disposed between the inner race 42a and the outer race 42b, and the pulley 44 is fixed to an upper surface of the inner race 42a by a screw 44a. The outer race 42b of the Z-axis ball screw nut 42 is supported by the support spacer 49. The support spacer 49 is configured by a substantially cylindrical supporting member and installed on the upper surface of the second arm 20, with a central axis of the support spacer 49 aligned with the center of the attachment hole 25.

The support spacer 49 is configured by a support base 49a in the shape of a short cylinder, and a support part 49b disposed in an upper part of the support base 49a. The support part 49b is configured into a substantially cylindrical shape by putting together two, left and right divided members. A space extending vertically is formed between the two members. A flange 42d is formed in an outer circumferential upper end part of the outer race 42b. The outer race 42b is fixed to the support part 49b, with an outer circumferential surface of the outer race 42b abutting with an inner surface of the support part 49b and the flange 42d abutting with an upper end of the support part 49b. Note that the Z-axis motor 43 is installed in the vicinity to the right of the support spacer 49. In addition, the plurality of steel balls that are engaged with the ball screw groove 31a are disposed on an inner circumferential surface of the inner race 42a.

The R-axis drive device 45 has the R-axis ball spline nut 46, an R-axis motor 47, a pulley 48 provided in the outer circumference of the operating spindle assembly 30 while being coupled to the R-axis ball spline nut 46, a pulley 47a provided on a rotary shaft of the R-axis motor 47, and a timing belt 47b wrapped around the pulleys 47a, 48.

The R-axis motor 47 is disposed to the right of the Z-axis motor 43, with the rotary shaft of the R-axis motor 47 directed downward, and the pulleys 47a, 48 and the timing belt 47b are disposed in a manner as to extend horizontally (laterally) in a left lower part inside the cover 37. An opening is formed in a right-side section of the support base 49a, and the timing belt 47b is wrapped around the pulley 48 inside the support spacer 49 and the pulley 47a outside the support spacer 49 through this opening. When the R-axis motor 47 is operated, its drive force is transmitted from the rotary shaft thereof to the R-axis ball spline nut 46 via the pulley 47a, the timing belt 47b and the pulley 48.

The R-axis ball spline nut 46 is configured by a ball bearing composed of an inner race 46a, an outer race 46b, and a plurality of ball-shaped rolling elements 46c disposed between the inner race 46a and the outer race 46b, and the pulley 48 is fixed to a lower surface of the inner race 46a by a screw 48a. A flange 46d is formed in an outer circumferential lower end part of the outer race 46b of the R-axis ball spline nut 46. The outer race 46b is fixed to the support spacer 49, with an outer circumferential surface of the outer race 46b abutting with the inner surface of the support part 49b and the flange 46d interposed between a lower end of the support part 49b and an upper end of the support base 49a. Note that the plurality of steel balls that are engaged with the ball screw grooves 31b are disposed on an inner circumferential surface of the inner race 46a.

In the configuration of the lifting/lowering rotary drive device 40 described above, the operating spindle assembly 30 is lowered without being rotated when the Z-axis motor 43 of the Z-axis drive device 41 is operated such that the rotary shaft of the Z-axis motor 41 rotates counterclockwise as viewed from above, while the R-axis motor 47 of the R-axis drive device 45 is stopped. In other words, because the R-axis motor 47 is stopped, the inner race 46a of the R-axis ball spline nut 46 is kept stopped, and the operating spindle assembly 30 cannot rotate due to the engagement between the ball spline grooves 31b and the plurality of steel balls of the inner race 46a. Therefore, rotating the inner race 42a of the Z-axis ball screw nut 42 by operating the Z-axis motor 43 lowers the operating spindle assembly 30 while changing the position where the ball screw groove 31a is engaged with the plurality of steel balls of the inner race 42a. Note that the operating spindle assembly 30 lifts without rotating, when the Z-axis motor 43 is operated such that the rotary shaft thereof rotates clockwise as viewed from above, while the R-axis motor 47 is stopped.

On the other hand, the operating spindle assembly 30 lifts while rotating when the R-axis motor 47 of the R-axis drive device 45 is operated such that the rotary shaft of the R-axis motor 47 rotates counterclockwise as viewed from above, while the Z-axis motor 43 of the Z-axis drive device 41 is stopped. In this case, the inner race 46a of the R-axis ball spline nut 46 is rotated by the operation of the R-axis motor 47. Consequently, the operating spindle assembly 30 tries to rotate as the ball spline grooves 31b and the plurality of steel balls of the inner race 46a come into engagement with each other. Furthermore, because the Z-axis motor 43 is stopped, the operating spindle assembly 30 gradually lifts while changing the position where the ball screw groove 31a is engaged with the plurality of steel balls of the inner race 42a. Also, when the R-axis motor 47 is operated such that the rotary shaft thereof rotates clockwise as viewed from above, while the Z-axis motor 43 is stopped, the operating spindle assembly 30 is lowered while rotating.

Moreover, when the R-axis motor 47 of the R-axis drive device 45 is operated such that the rotary shaft of the R-axis motor 47 rotates counterclockwise as viewed from above, and the Z-axis motor 43 of the Z-axis drive device 41 is operated at the same speed as the R-axis motor 47 such that the rotary shaft of the Z-axis motor 43 rotates counterclockwise as viewed from above, the operating spindle assembly 30 rotates counterclockwise without moving vertically. In this case, although the operating spindle assembly 30 tries to rotate and at the same time lift by the operation of the R-axis motor 47, the operating spindle assembly 30 tries to fall by the operation of the Z-axis motor 43. For this reason, the operating spindle assembly 30 rotates counterclockwise without moving vertically. When the R-axis motor 47 and the Z-axis motor 43 are operated such that the rotary shafts thereof rotate clockwise as viewed from above, and the inner race 42a of the Z-axis ball screw nut 42 and the inner race 46a of the R-axis ball spline nut 46 are rotated at the same speed, the operating spindle assembly 30 rotates clockwise without moving vertically.

In this manner, the lifting/lowering rotary drive device 40 can rotate the operating spindle assembly 30 in a predetermined direction and move the operating spindle assembly 30 vertically, by operating the Z-axis motor 43 and the R-axis motor 47 independently or in conjunction with each other. Furthermore, the Z-axis motor 43 and the R-axis motor 47 are provided with brakes in order to prevent the operating spindle assembly 30 from falling or rotating unexpectedly when the Z-axis motor 43 and the R-axis motor 47 are stopped. Note that speed reducers may be fitted to the Z-axis motor 43 and the R-axis motor 47 in order to reduce the rotating speeds and transmit the decelerated rotary movements to the pulleys 44, 48.

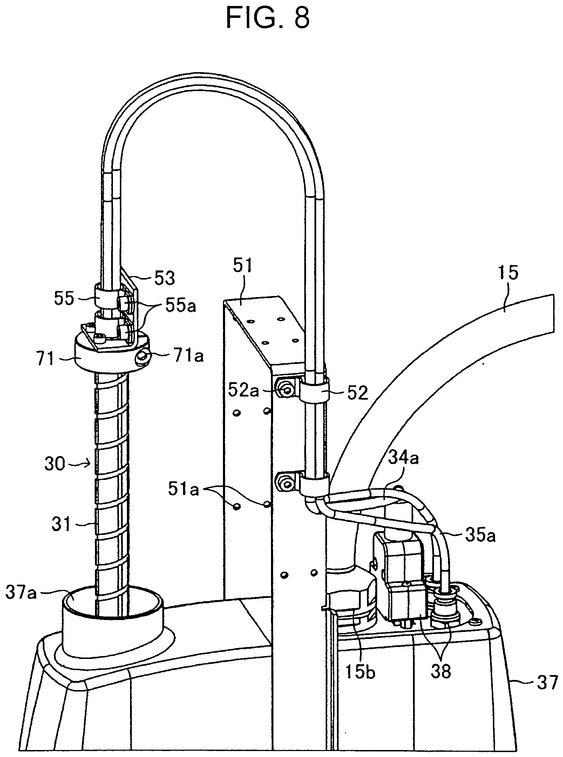

As shown in Fig. 8, a tip end part of the cable 15 extending from the right-side surface part 11c of the case 11 is fixed to a right-side section of the upper surface of the cover 37 by an attachment member 15b. An external wire 34a (external striate member) and an external pipe 35a (external striate member) extend from the right-hand side of the attachment member 15b of the upper surface of the cover 37 toward an upper end of the operating spindle assembly 30, and base end-side sections of the external wire 34a and the external pipe 35a are fixed by connecting members 38 configured by a wire connector and pipe joint provided on the upper surface of the cover 37. Base end parts of the external wire 34a and the external pipe 35a are connected, respectively, to a wire and a pipe that extend via the cable 15 in the cover 37.

A central section in the lateral direction of the second arm 20 is provided with a C-shaped stay 51 that extends upward along front and rear side parts of the cover 37. A plurality of screw insertion holes 51a are formed in the stay 51. Furthermore, the external wire 34a and the external pipe 35a are fixed to the stay 51 by a plurality of nylon clamps 52 and screws 52a that are disposed along a section extending vertically in a front part of the stay 51 and disposed at intervals in the vertical direction. A lower end part of the stay 51 is bent along a bottom surface of the second arm 20, and this bent section is fixed to the second arm 20 by a bolt.

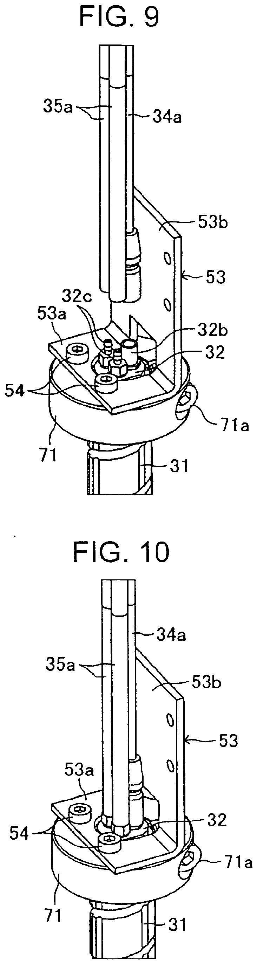

Tip end sections of the external wire 34a and the external pipe 35a are extend toward the upper end of the operating spindle assembly 30. The tip end part of the external wire 34a is connected to the wire connector 32b of the upper end connecting member 32 provided at the upper end of the operating spindle assembly 30, and the tip end part of the external pipe 35a is connected to the pipe joint 32c of the upper end connecting member 32. Fig. 9 shows a state in which the tip end parts of the external wire 34a and the external pipe 35a are brought close to the upper end of the operating spindle assembly 30. Fig. 10 shows a state in which the external wire 34a is connected to the wire connector 32b and the external pipe 35a is connected to the pipe joint 32c.

In addition, a substantially ring-shaped lowering end stopper 71 is fixed to an outer circumferential surface of an upper end of the operating spindle 31 by a bolt 71a. A stay 53 (retaining member) is attached to an upper surface of the lowering end stopper 71, and the external wire 34a and the external pipe 35a are fixed to an upper surface of the upper end connecting member 32 via the stay 53. The stay 53 is an L-shaped member that has a horizontal piece 53a having a plurality of screw insertion holes formed therein and a perpendicular piece 53b standing upright on an end of the horizontal piece 53a. In a section from the center of the horizontal piece 53a to a lower part of the perpendicular piece 53b are formed insertion holes for allowing upper parts of the wire connector 32b and the pipe joint 32c to project upward.

A plurality of screw holes are formed on the upper surface of the lowering end stopper 71. The stay 53 is disposed on the upper surface of the lowering end stopper 71, with the insertion holes of the horizontal piece 53a aligned with the screw holes of the lowering end stopper 71, and fixed to the lowering end stopper 71 by a screw 54. The external wire 34a and the external pipe 35a are fixed to the perpendicular piece 53b by two nylon clamps 55 and two screws 55a. The lengths of the external wire 34a and the external pipe 35a in a section extending from the connecting members 38 to the stay 53 are set in a manner as to conform with the operating spindle assembly 30 and so that the external wire 34a and the external pipe 35a do not sag, in consideration of the occurrence of twist caused upon vertical stroke and axial rotation of the operating spindle assembly 30.

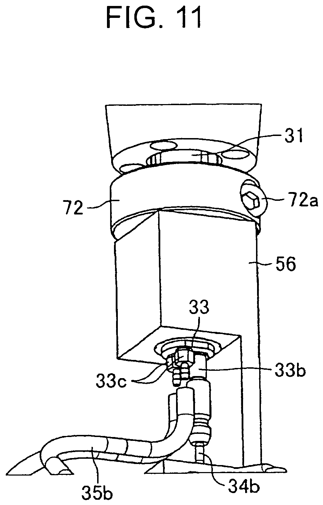

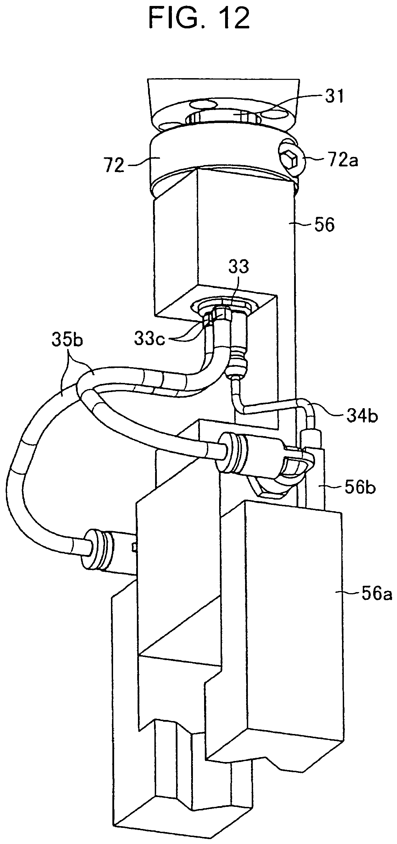

Also, as shown in Fig. 11, the connector sections of the wire connector 33b of the lower end connecting member 33 provided at a lower end of the operating spindle assembly 30 and the joint sections of the pipe joint 33c project downward. An external wire 34b (external striate member) is connected to the wire connector 33b, and an external pipe 35b (external striate member) is connected to the pipe joint 33c. Fig. 11 shows a state in which base end parts of the external wire 34b and the external pipe 35b are brought close to the lower end of the operating spindle assembly 30. Fig. 12 shows a state in which the base end part of the external wire 34b is connected to the wire connector 33b and the base end part of the external pipe 35b is connected to the pipe joint 33c.

In addition, a substantially ring-shaped lifting end stopper 72 is fixed to an outer circumferential surface of the lower end of the operating spindle assembly 30 by a bolt 72a. An adapter 56 is attached to the outer circumferential surface of the lower end of the operating spindle assembly 30 while abutting with a lower surface of the lifting end stopper 72. A hand 56a is attached to the operating spindle assembly 30 via this adapter 56. A work tool such as an industrial tool, a chuck, a work arm, a work device such as a suction device, and a sensor 56b are attached to the hand 56a. Some of the various wires and pipes passing through the case 11 and the cable 15 are connected to the motors 12, 21 and the like, and the rest of the wires and pipes are connected to the work device and the sensor 56b attached to the hand 56a, via the external wire 34a and the external pipe 35a, the internal wire 34 and the internal pipe 35, as well as the external wire 34b and the external pipe 35b.

The wires configured by the external wire 34a, the internal wire 34 and the external wire 34b are connected to a controller (not shown) or a power source, and each of the devices provided in the SCARA robot A is operated under control of the controller. Since the section between a lower end part of the operating spindle assembly 30 and the hand 56a or the sensor 56b does not have to be too long, the lengths of the external wire 34b and the external pipe 35b are kept minimum.

When using this SCARA robot A as a component mounting apparatus for mounting electronic components on, for example, a substrate, a member such as a substrate on which an electronic component is loaded is installed in a predetermined location, and the electronic component is prepared in a predetermined location. Furthermore, a suction device is loaded in the hand 56a, and a negative-pressure pipe, which is one of the external pipe 35b, is connected to the suction device. Then, a switch or the like is operated to start operating the SCARA robot A. Consequently, the first arm 18 rotates on the horizontal plane around the rotary shaft 12b of the motor 12 with respect to the base part 10, and the second arm 20 rotates on the horizontal plane around the rotary shaft 21b of the motor 21 with respect to the first arm 18, thereby moving the operating spindle 31 to the location where the electronic component is installed.

Subsequently, the Z-axis motor 43 and the R-axis motor 47 are operated so that the suction device is lowered along with the operating spindle assembly 30 and rotates axially to suction the electronic component in a predetermined direction. In this state, the suction device suctions the electronic component. Next, the Z-axis motor 43 is operated to lift the suction device. As a result, the first arm 18 and the second arm 20 rotate with respect to the base part 10 and the first arm 18, respectively, by the operations of the motors 12, 21, and the suction device moves to above the predetermined position of the substrate.

Next, the Z-axis motor 43 and the R-axis motor 47 are operated so that the suction device is lowered and rotated axially to place the electronic component on the position where the substrate is installed. In this state, the electronic component suctioned by the suction device is released and mounted on the substrate. A plurality of electronic components can be loaded sequentially on the substrate by repeating this process. In so doing, the range of the downward movement of the operating spindle assembly 30 is regulated by the lowering end stopper 71, whereas the upward movement of the same is regulated by the lifting end stopper 72.

When the operating spindle assembly 30 needs to be removed due to damage of the operating spindle 31 or maintenance, the external wires 34a, 34b and the external pipes 35a, 35b are removed from the operating spindle assembly 30, and the lowering end stopper 71, the lifting end stopper 72, the adapter 56 and the like are removed. In this state, the operating spindle assembly 30 is lowered or lifted while being rotated, to remove the operating spindle assembly 30 from a main body of the SCARA robot A. Thereafter, a new operating spindle assembly 30 is incorporated into the main body of the SCARA robot A. Then, the external wires 34a, 34b and the external pipes 35a, 35b are connected to the operating spindle assembly 30, and the lowering end stopper 71, the lifting end stopper 72, the adapter 56 and the like are attached thereto.

Note that the R-axis ball spline nut 46 and the operating spindle 31 are pre-compressed by changing the diameter of the plurality of steel balls. However, when replacing the operating spindle assembly 30, replacing only the operating spindle assembly 30 might excessively pre-compress or does not pre-compress the R-axis ball spline nut 46 and the operating spindle 31. It also might cause problems between the new operating spindle assembly 30 and the Z-axis ball screw nut 42. In such a case, the operating spindle assembly 30 can be replaced not only alone but also along with the Z-axis ball screw nut 42 and the R-axis ball spline nut 46.

As described above, in the SCARA robot A according to the present embodiment, the connecting wires are configured by the internal wire 34 installed in the operating spindle 31 and the external wires 34a, 34b connected to both ends of the internal wire 34, and the connecting pipes are configured by the internal pipe 35 installed in the operating spindle 31 and the external pipes 35a, 35b connected to both ends of the internal pipe 35. The operating spindle assembly 30 is configured by fitting the internal wire 34 and the internal pipe 35 to the operating spindle 31 via the upper end connecting member 32 and the lower end connecting member 33 that are provided in both end openings of the operating spindle 31.

Therefore, when replacing the operating spindle assembly 30 due to breakage or the like of the operating spindle 31, the external wires 34a, 34b and the external pipes 35a, 35b are removed from the operating spindle assembly 30, and the operating spindle assembly 30 is removed from the main body of the SCARA robot A. Then, a new operating spindle assembly 30 is attached to the main body of the SCARA robot A, and the external wires 34a, 34b and the external pipes 35a, 35b are connected to the new operating spindle assembly 30. In this manner, the operating spindle 31 can be replaced. This results in eliminating the need to pull out/insert the whole wires and pipes from/into the operating spindle 31. This facilitates the attachment/detachment of the operating spindle 31 to/from the main body of the SCARA robot A when replacing the operating spindle 31 due to maintenance.

In addition, providing the upper end connecting member 32 to the upper end opening of the operating spindle 31 facilitates the operation of connecting/disconnecting the external wire 34a and the external pipe 35a to/from the internal wire 34 and the internal pipe 35. Moreover, providing the lower end connecting member 33 to the lower end opening of the operating spindle 31 facilitates the operation of connecting/disconnecting the external wire 34b and the external pipe 35b to/from the internal wire 34 and the internal pipe 35. Also, because the lowering end stopper 71 is provided with the stay 53 for retaining the external wire 34a and the external pipe 35a, the external wire 34a and the external pipe 35a are prevented from being swayed and then broken when the operating spindle 31 moves.

### (Second Embodiment)

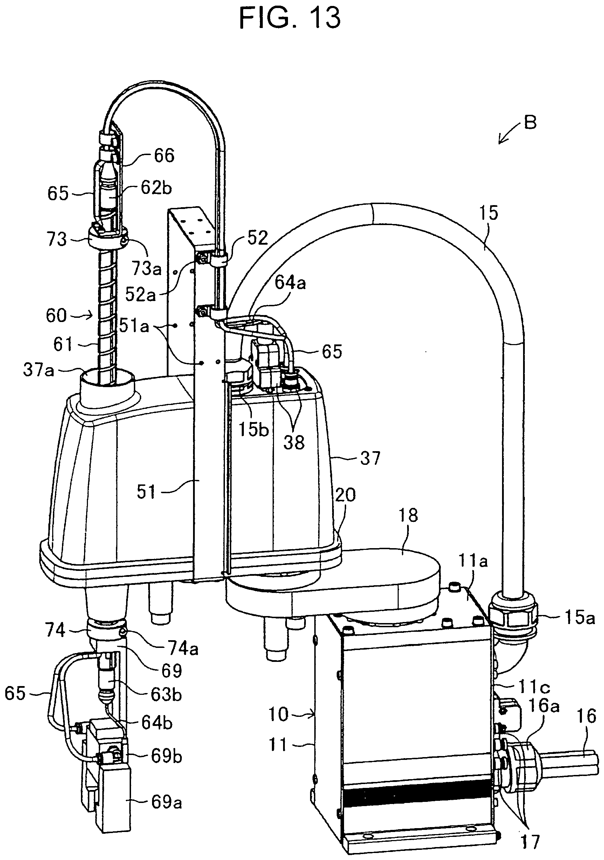

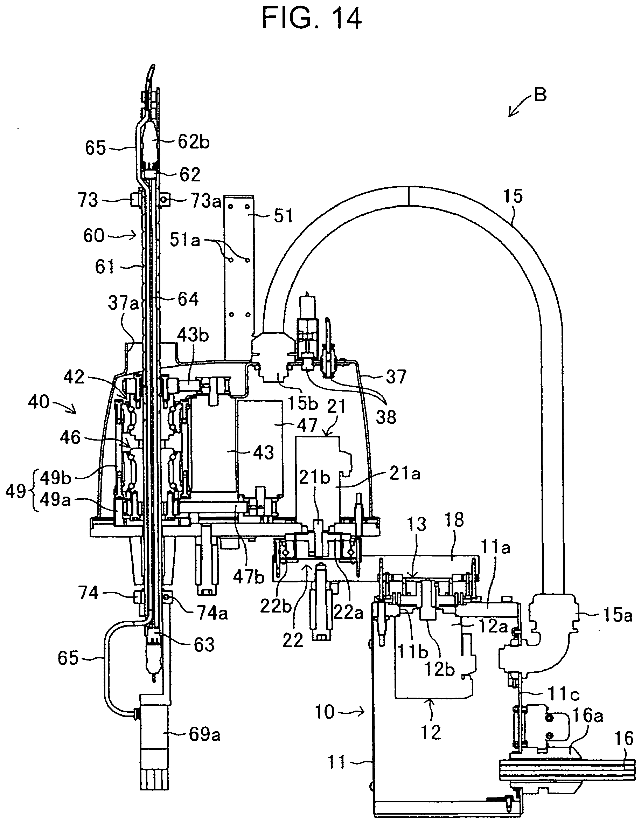

Figs. 13 and 14 each show a SCARA robot B according to a second embodiment of the present invention.

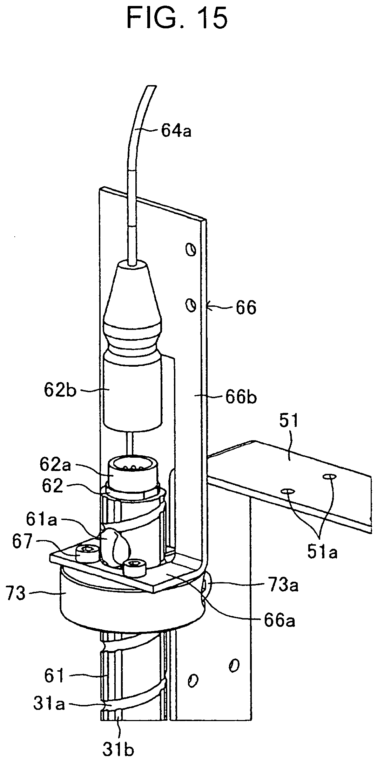

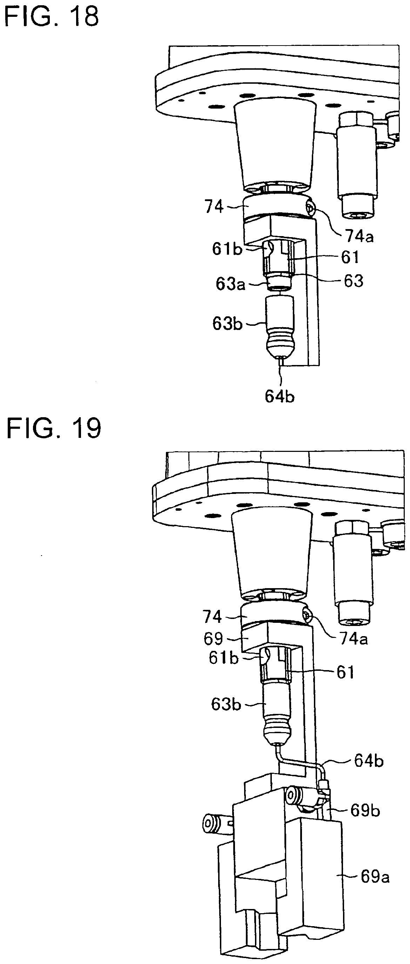

In place of the internal pipe 35 and the external pipes 35a, 35b described above the SCARA robot B has two continuous pipes 65 (continuous striate members) that extend continuously, and only an internal wire 64 is installed in an operating spindle assembly 60. In the operating spindle assembly 60, an upper end connecting member 62 and a lower end connecting member 63 are attached to an upper opening and a lower opening of a hollow operating spindle 61, respectively, and an internal wire 64 (internal striate member) is connected to the upper end connecting member 62 and the lower end connecting member 63. Furthermore, as shown in Figs. 15 to 17, an upper through-hole 61a is formed on a side surface of the operating spindle 61, in the vicinity of an upper end of the operating spindle 61. Moreover, a lower through-hole 61b is formed on a side surface of the operating spindle 61, in the vicinity of a lower end of the operating spindle 61, as shown in Figs. 18 to 20.

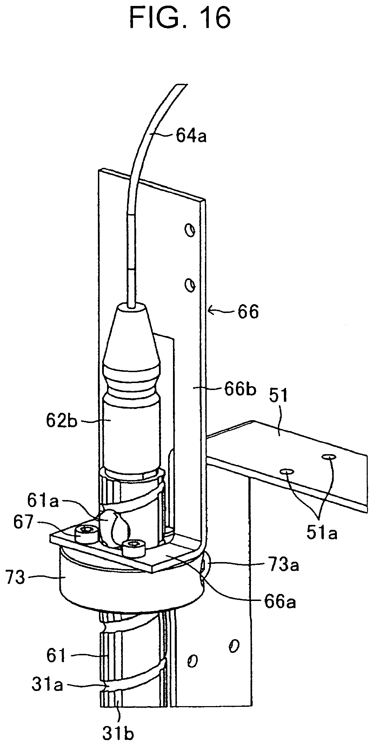

Figs. 15 to 17 each show an upper end part of the operating spindle assembly 60 of the SCARA robot B. As shown in these diagrams, a connector 62b capable of meshing with a wire connector 62a of the upper end connecting member 62 is attached to a tip end part of an external wire 64a (external striate member). By pushing the connector 62b of the external wire 64a against the wire connector 62a of the upper end connecting member 62 in a state in which the connector 62b is brought close to the wire connector 62a, as shown in Fig. 15, the wire connector 62a and the connector 62b are coupled to each other so that the internal wire 64 and the external wire 64a are connected to each other, as shown in Fig. 16.

The continuous pipes 65 also pass through the inside of the operating spindle 61. More specifically, in the state shown in Fig. 16, tip end parts of the continuous pipes 65 extending from the outside are inserted into the operating spindle 61 through the upper through-hole 61a, and tip end-side sections of the continuous pipes 65 are pulled out of the lower through-hole 61b to the outside. Moreover, a substantially ring-shaped lowering end stopper 73 is fixed to an outer circumferential surface of an upper end part of the operating spindle 61 by a bolt 73a.

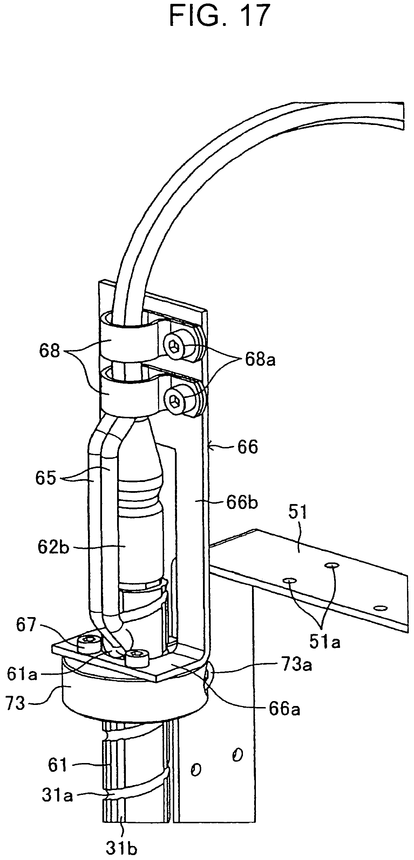

A stay 66 (retaining member) is fixed to an upper surface of the lowering end stopper 73 by a screw 67, and the external wire 64a and the continuous pipes 65 are fixed to a perpendicular piece 66b of the stay 66 by two nylon clamps 68 and two screws 68a (see Fig. 17). Note that the stay 66 has a horizontal piece 66a and the perpendicular piece 66b standing upright on an end of the horizontal piece 66a. The stay 66 has the same configuration as the stay 53 described above, except that the perpendicular piece 66b is vertically longer than the perpendicular piece 53b of the stay 53 and that an upper part of the operating spindle 61 is inserted into an insertion hole.

Figs. 18 to 20 each show a lower end section of the operating spindle assembly 60 of the SCARA robot B. As shown in these diagrams, a connector 63b capable of meshing with a wire connector 63a of the lower end connecting member 63 is attached to a base end part of an external wire 64b (external striate member). By pushing the connector 63b of the external wire 64b against the wire connector 63a of the lower end connecting member 63 in a state in which the connector 63b is brought close to the wire connector 63a, as shown in Fig. 18, the wire connector 63a and the connector 63b are coupled to each other so that the internal wire 64 and the external wire 64b are connected to each other, as shown in Fig. 19. Note that the continuous pipes 65 that are pulled out of the lower through-hole 61b to the outside are not shown in Figs. 18 and 19.

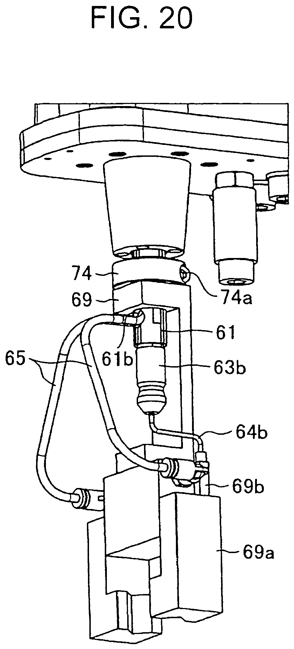

As shown in Fig. 20, a tip end part of the external wire 64b is connected to a sensor 69b or the like, and the tip end parts of the continuous pipes 65 pulled out of the lower through-hole 61b are connected to a work device or the like attached to a hand 69a. A substantially ring-shaped lifting end stopper 74 is fixed to an outer circumferential surface of a lower end of the operating spindle assembly 60 by a bolt 74a. Furthermore, an adapter 69 is attached to the outer circumferential surface of the lower end of the operating spindle assembly 60 while abutting with a lower surface of the lifting end stopper 74. The hand 69a is attached to the operating spindle assembly 60 via this adapter 69. The configurations of the other sections of the SCARA robot B are same as those of the SCARA robot A described above. Therefore, the explanations thereof are omitted by applying the same reference numerals to the corresponding same sections.

In the SCARA robot B according to the present embodiment, in addition to the connecting wires composed of the internal wire 64 incorporated in the operating spindle assembly 60 and the external wires 64a, 64b connected to the internal wire 64, the continuous pipes 65 that extend continuously pass through the inside of the operating spindle 61 without passing through the upper and lower openings of the operating spindle 61. In other words, in the configuration of the operating spindle assembly 60 in which the wire connector 62a and the wire connector 63a are disposed in the upper and lower openings of the operating spindle 61, it is difficult to pass the continuous pipes 65 through the operating spindle 61 via the upper and lower openings, but a space for accommodating some of the continuous pipes 65 might exist in the operating spindle 61.

In this case, as mentioned earlier, the continuous pipes 65 can be inserted from the upper through-hole 61a of the operating spindle 61 into the operating spindle 61, and the tip end-side sections of the continuous pipes 65 can be pulled out from the lower through-hole 61b to the outside of the operating spindle 61. Therefore, even with the wire connectors 62a, 63a in the upper and lower openings of the operating spindle 61, the continuous pipes 65 can be passed through the operating spindle 61. The other operation effects of the SCARA robot B are same as those of the SCARA robot A described above.

The robot according to the present invention is not limited to the embodiments described above and can be implemented with some appropriate changes. In the first embodiment, the operating spindle assembly 30 is configured by connecting the internal wire 34 and the internal pipe 35 to the upper end connecting member 32 and the lower end connecting member 33 that are attached respectively to the upper end and the lower end of the operating spindle 31. However, the configuration of the operating spindle assembly is not limited thereto.

For instance, in the operating spindle assembly 30, only the upper end connecting member 32 may be connected to the upper end of the operating spindle 31, and the lower end connecting member 33 may be omitted. In this case, the internal wire and the internal pipe may extend from the inside of the operating spindle 31 to the outside through the lower end opening of the operating spindle 31. On the other hand, in the operating spindle assembly 30, only the lower end connecting member 33 may be attached to the lower end of the operating spindle 31, and the upper end connecting member 32 may be omitted. In this case, the internal wire and the internal pipe may extend from the inside of the operating spindle 31 to the outside through the upper end opening of the operating spindle 31.

According to the second embodiment, in the operating spindle assembly 60, the internal wire 64 serving as an internal striate member is fixedly provided in the operating spindle 61, and the continuous pipes 65 serving as continuous striate members are inserted into the operating spindle 61 via the upper through-hole 61a and the lower through-hole 61b. However, only the upper end connecting member 62 may be attached to the upper through-hole 61a of the operating spindle 61, without providing the lower end connecting member 63. In this case, the continuous striate members are inserted from the upper through-hole 61a into the operating spindle 61 and pulled out of the lower end opening of the operating spindle 61. On the other hand, only the lower end connecting member 63 may be attached to the lower through-hole 61b of the operating spindle 61, without providing the upper end connecting member 62. In this case, the continuous striate members are inserted from the upper end opening into the operating spindle 61 and pulled out of the lower through-hole 61b. The configurations of the other sections of the SCARA robot according to the present embodiment can be changed appropriately within the technical scope of the present invention.

The present invention described above is summarized as follows.

A SCARA robot according to one aspect of the present invention has: an arm that extends in a horizontal direction and is capable of rotating perpendicularly axially around a rotation central part located in one end part in a longitudinal direction of the arm; an operating spindle assembly that is provided detachably to the other end part in the longitudinal direction of the arm; and an external striate member connected to the operating spindle assembly, wherein the operating spindle assembly includes a hollow operating spindle that moves in a vertical direction with respect to the arm, and an internal striate member which is disposed inside the operating spindle and retained in the operating spindle and to which the external striate member is detachably connected, wherein the operating spindle assembly further has a connecting member attached to an end part of the operating spindle for relaying the internal striate member and the external striate member, wherein the internal striate member includes an internal wire formed of an electric wire, and the external striate member includes an external wire formed of an electric wire and connected detachably to the internal wire, and wherein the connecting member includes a bush flange provided at an upper end or a lower end of the operating spindle and a wire connector which has an external connector section projecting to the outside of the operating spindle and an internal connector section positioned on the inside of the operating spindle, the connecting member being connected to the operating spindle by being screwed or press-fitted, the wire connector being retained in a vertical communicating hole of the bush flange, one of the external connector section and the internal connector section extending above the bush flange and the other one of the external connector section and the internal connector extending below the bush flange, the external connector section being connected to the external wire and the internal connector section being connected to the internal wire.

According to this SCARA robot, when replacing the operating spindle, the external striate member and the internal striate member are disconnected from each other, and the operating spindle assembly (the operating spindle and the internal striate member) is removed from the arm. A new operating spindle assembly is attached to the arm, and then the external striate member and the internal striate member are connected to each other. In this manner, the operating spindle can be replaced easily. In other words, it is not necessary to pull out/insert the entire striate members from/into the operating spindle, which is performed in the prior art. Therefore, attachment/detachment of the operating spindle to/from the arm can be performed easily. As described above, a connecting member such as a connector is provided to the operating spindle, to indirectly connect the external striate member and the internal striate member via this connecting member. Furthermore, the internal striate member may be positioned entirely inside the operating spindle as long as the internal striate member is disposed within the operating spindle and fixed thereto.

According to this configuration, the external striate member can be easily connected to the internal striate member, outside the operating spindle, and the connection therebetween can be released. As a result, the operating spindle can be replaced easily.

Note that in this SCARA robot, the internal striate member includes an internal wire formed of an electric wire, and the external striate member includes an external wire formed of an electric wire and connected detachably to the internal wire.

According to this configuration, various devices provided in the SCARA robot, such as various devices built in the main body section of the SCARA robot and various devices attached to the operating spindle, can be electrically connected by the operating spindle.

Moreover, in the SCARA robot described above, the internal striate member may include an internal pipe made of a pipe material, and the external striate member may include an external pipe made of a pipe material and connected detachable to the internal pipe, wherein the connecting member includes a pipe joint which has an external joint section projecting to the outside of the operating spindle and an internal joint section positioned on the inside of the operating spindle, the pipe joint being retained in a vertical communicating hole of the bush flange, one of the external joint section and the internal joint section extending above the bush flange and the other one of the external joint section and the internal joint section extending below the bush flange, the external joint section being connected to the external pipe and the internal joint section being connected to the internal pipe.

According to this configuration, air (positive pressure) or negative pressure can be supplied to the devices provided in the SCARA robot, such as the various devices attached to the operating spindle, via the operating spindle.

In the SCARA robot described above, the external striate member includes a base end-side striate member that is connected to the internal striate member at an upper end part of the operating spindle.

According to this configuration, for example, a tip end part of the base end-side striate member extending from the main body side of the SCARA robot toward the operating spindle can be detachably connected to the internal striate member at the upper end part of the operating spindle.

In this case, it is preferred that an upper end connecting member, which is coupled to an upper end of the operating spindle and to which the base end-side striate member is connected detachably, be provided as the connecting member.

According to this configuration, because the base end-side striate member is attached/detached to/from the upper end connecting member, operations for connecting and disconnecting the base-end side striate member and the internal striate member can be performed more easily at the upper end part of the operating spindle.

In addition, in the SCARA robot, the external striate member includes a tip end-side striate member that is connected to the internal striate member at a lower end part of the operating spindle.

According to this configuration, for example, a base end part of the tip end-side striate member that extends from the operating spindle toward the various devices disposed on the lower side thereof can be connected detachably to the internal striate member at the lower end part of the operating spindle.

In this case, it is preferred that a lower end connecting member, which is coupled to a lower end of the operating spindle and to which the tip end-side striate member is connected detachably, be provided as the connecting member.

According to this configuration, because the tip end-side striate member is attached/detached to/from the lower end connecting member, operations for connecting and disconnecting the tip end-side striate member and the internal striate member can be performed more easily at the lower end part of the operating spindle.

Moreover, the SCARA robot described above may further have a retaining member that is fixed to the operating spindle and retains the internal striate member or the external striate member at a position in the vicinity of the upper end of the operating spindle.

According to this configuration, a section on the striate member (the internal striate member or the external striate member) that is located in an upper part of the operating spindle is retained by the retaining member. This prevents the striate member from being swayed and its section located in the upper part of the operating spindle from being broken when the operating spindle moves. Note that the striate member is preferably fixed on the upper side of an upper end opening of the operating spindle, in order to prevent the striate member from rubbing a circumferential rim part of the upper end opening of the operating spindle and being worn out.

In the SCARA robot, the operating spindle may further have an upper through-hole that is formed on a side surface in the vicinity of the upper end of the operating spindle and communicates the inside and the outside of the operating spindle.

In the SCARA robot described above, the operating spindle may further have a lower through-hole that is formed on a side surface in the vicinity of the lower end of the operating spindle and communicates the inside and the outside of the operating spindle.

## Claims

1. A selective compliance assembly robot arm (SCARA) robot (A), comprising:
an arm (20) that extends in a horizontal direction and is capable of rotating perpendicularly axially around a rotation central part (23) located in one end part in a longitudinal direction of the arm;
an operating spindle assembly (30) that is provided detachably to the other end part in the longitudinal direction of the arm; and
an external striate member (34a, 34b, 35a, 35b) connected to the operating spindle assembly,
wherein the operating spindle assembly includes a hollow operating spindle (31) that moves in a vertical direction with respect to the arm, and an internal striate member (34, 35) which is disposed inside the operating spindle and retained in the operating spindle and to which the external striate member is detachably connected,
wherein the operating spindle assembly further has a connecting member (32, 33) attached to an end part of the operating spindle (31) for relaying the internal striate member and the external striate member, and
wherein the internal striate member includes an internal wire (34) formed of an electric wire, and the external striate member includes an external wire (34a, 34b) formed of an electric wire and connected detachably to the internal wire,
**characterized in that** the connecting member (32, 33) includes a bush flange (32a, 33a) provided at an upper end or a lower end of the operating spindle and a wire connector (32b, 33b) which has an external connector section projecting to the outside of the operating spindle and an internal connector section positioned on the inside of the operating spindle, the connecting member being connected to the operating spindle by being screwed or press-fitted, the wire connector being retained in a vertical communicating hole of the bush flange, one of the external connector section and the internal connector section extending above the bush flange and the other one of the external connector section and the internal connector section extending below the bush flange, the external connector section being connected to the external wire and the internal connector section being connected to the internal wire.

2. The SCARA robot according to claim 1, wherein the internal striate member includes an internal pipe (35) made of a pipe material, and the external striate member includes an external pipe (35a, 35b) made of a pipe material and connected detachable to the internal pipe, wherein the connecting member includes a pipe joint (32c, 33c) which has an external joint section projecting to the outside of the operating spindle and an internal joint section positioned on the inside of the operating spindle, the pipe joint being retained in a vertical communicating hole of the bush flange, one of the external joint section and the internal joint section extending above the bush flange and the other one of the external joint section and the internal joint section extending below the bush flange, the external joint section being connected to the external pipe and the internal joint section being connected to the internal pipe.

3. The SCARA robot according to claim 1 or 2, comprising, as the connecting member, an upper end connecting member (32) attached to an upper end of the operating spindle.

4. The SCARA robot according to any one of claims 1 to 3, comprising, as the connecting member, a lower end connecting member attached to a lower end of the operating spindle.

5. The SCARA robot according to any one of claims 1 to 4, further comprising a retaining member (53) that is fixed to the operating spindle and retains the internal striate member or the external striate member at a position in the vicinity of the upper end of the operating spindle.

6. The SCARA robot according to claim 1,
wherein the operating spindle (61) has an upper through-hole (61a) that is formed on a side surface in the vicinity of the upper end of the operating spindle and communicates the inside and the outside of the operating spindle, and
wherein the SCARA robot further comprises a continuous pipe (65) that is inserted into the operating spindle through the upper through-hole and continuously extends toward the lower side of the operating spindle.

7. The SCARA robot according to claim 1,
wherein the operating spindle (61) has a lower through-hole (61b) that is formed on a side surface in the vicinity of the lower end of the operating spindle and communicates the inside and the outside of the operating spindle,
the SCARA robot further comprising a continuous pipe (65) that is inserted from an upper side of the operating spindle into the operating spindle, extends continuously toward the lower side of the operating spindle, and is pulled out of the lower through-hole to the outside of the operating spindle.

## Patentansprüche

1. SCARA- (Selective Compliance Assembly Robot Arm) Roboter (A), der umfasst:
einen Arm (20), der sich in einer Horizontalrichtung erstreckt und fähig ist, sich senkrecht axial um einen Drehmittelteil (23), der in einem Endteil in einer Längsrichtung des Arms angeordnet ist, zu drehen;
eine Arbeitsspindelanordnung (30), die abnehmbar an dem anderen Endteil in der Längsrichtung des Arms bereitstellt ist; und
ein äußeres Linienelement (34a, 34b, 35a, 35b), das mit der Arbeitsspindelanordnung verbunden ist,
wobei die Arbeitsspindelanordnung eine hohle Arbeitsspindel (31), die sich in Bezug auf den Arm in einer Vertikalrichtung bewegt, und ein inneres Linienelement (34, 35) umfasst, das innerhalb der Arbeitsspindel angeordnet ist, und in der Arbeitsspindel festgehalten wird und mit dem das äußere Linienelement abnehmbar verbunden ist,
wobei die Arbeitsspindelanordnung ferner ein Verbindungselement (32, 33) hat, das an einem Endteil der Arbeitsspindel (31) befestigt ist, um das innere Linienelement und das äußere Linienelement zu verbinden, und
wobei das innere Linienelement einen Innendraht (34) umfasst, der zu einem elektrischen Draht ausgebildet ist, und das äußere Linienelement einen Außendraht (34a, 34b) umfasst, der zu einem elektrischen Draht ausgebildet ist und abnehmbar mit dem Innendraht verbunden ist,
**dadurch gekennzeichnet, dass** das Verbindungselement (32, 33) umfasst: einen Hülsenflansch (32a, 33a), der an einem oberen Ende oder einem unteren Ende der Arbeitsspindel bereitgestellt ist, und einen Drahtverbinder (32b, 33b), der einen äußeren Verbinderabschnitt, der nach außerhalb der Arbeitsspindel vorsteht, und einen inneren Verbinderabschnitt, der auf der Innenseite der Arbeitsspindel positioniert ist, hat, wobei das Verbindungselement mit der Arbeitsspindel verbunden ist, indem es geschraubt oder pressgepasst ist, wobei der Drahtverbinder in einem vertikalen Verbindungsloch des Hülsenflansches festgehalten wird, wobei der äußere Verbinderabschnitt oder der innere Verbinderabschnitt sich oberhalb des Hülsenflansches erstreckt und der andere des äußeren Verbinderabschnitts und des inneren Verbinderabschnitts sich unterhalb des Hülsenflansches erstreckt, wobei der äußere Verbindungsabschnitt mit dem Außendraht verbunden ist und der innere Verbinderabschnitt mit dem Innendraht verbunden ist.

2. SCARA-Roboter nach Anspruch 1, wobei das innere Linienelement eine aus einem Rohrmaterial hergestellte Innenrohrleitung (35) umfasst und das äußere Linienelement eine aus einem Rohrmaterial hergestellte Außenrohrleitung (35a, 35b) umfasst,
wobei das Verbindungselement ein Rohrleitungsverbindungsstück (32c, 33c) umfasst, das einen äußeren Verbindungsstückabschnitt, der nach außerhalb der Arbeitsspindel vorsteht, und einen inneren Verbindungsstückabschnitt, der auf der Innenseite der Arbeitsspindel positioniert ist, hat, wobei das Rohrleitungsverbindungsstück in einem vertikalen Verbindungsloch des Hülsenflansches festgehalten wird, wobei der äußere Verbindungsstückabschnitt oder der innere Verbindungsstückabschnitt sich oberhalb des Hülsenflansches erstreckt und der andere des äußeren Verbindungsstückabschnitts und des inneren Verbindungsstückabschnitts sich unterhalb des Hülsenflansches erstreckt, wobei der äußere Verbindungsstückabschnitt mit der äußeren Rohrleitung verbunden ist und der innere Verbindungsstückabschnitt mit der inneren Rohrleitung verbunden ist.

3. SCARA-Roboter nach Anspruch 1 oder 2, der als das Verbindungselement ein oberes Endverbindungselement, (32), das an einem oberen Ende der Arbeitsspindel befestigt ist, umfasst.

4. SCARA-Roboter nach einem der Ansprüche 1 bis 3, der als das Verbindungselement ein unteres Endverbindungselement, das an einem unteren Ende der Arbeitsspindel befestigt ist, umfasst.

5. SCARA-Roboter nach einem der Ansprüche 1 bis 4, der ferner ein Festhalteelement (53) umfasst, das an der Arbeitsspindel fixiert ist und das innere Linienelement oder das äußere Linienelement an einer Position in der Nachbarschaft des oberen Endes der Arbeitsspindel festhält.

6. SCARA-Roboter nach Anspruch 1,
wobei die Arbeitsspindel (61) ein oberes Durchgangsloch (61a) hat, das auf einer Seitenfläche in der Nachbarschaft des oberen Endes der Arbeitsspindel ausgebildet ist und mit dem Inneren und dem Äußeren der Arbeitsspindel in Verbindung steht, und
wobei der SCARA-Roboter ferner eine kontinuierliche Rohrleitung (65) umfasst, die durch das obere Durchgangsloch in die Arbeitsspindel eingesetzt ist und sich kontinuierlich in Richtung der Unterseite der Arbeitsspindel erstreckt.

7. SCARA-Roboter nach Anspruch 1,
wobei die Arbeitsspindel (61) ein unteres Durchgangsloch (61b) hat, das auf einer Seitenfläche in der Nachbarschaft des unteren Endes der Arbeitsspindel ausgebildet ist und mit dem Inneren und dem Äußeren der Arbeitsspindel in Verbindung steht, und
wobei der SCARA-Roboter ferner eine kontinuierliche Rohrleitung (65) umfasst, die von einer Oberseite der Arbeitsspindel in die Arbeitsspindel eingesetzt ist, sich kontinuierlich in Richtung der Unterseite der Arbeitsspindel erstreckt und aus dem unteren Durchgangsloch nach außerhalb der Arbeitsspindel gezogen wird.

## Revendications

1. Robot de type SCARA (bras robotisé d'assemblage à conformité sélective) (A) comportant:
un bras (20) qui s'étend dans un sens horizontal et qui est capable de tourner selon un axe perpendiculaire autour d'une partie centrale de rotation (23) située dans une première partie d'extrémité dans un sens longitudinal du bras ;
un ensemble arbre de commande (30) prévu détachable sur l'autre partie d'extrémité dans le sens longitudinal du bras ; et
un élément strié externe (34a, 34b, 35a, 35b) relié à l'ensemble arbre de commande,
dans lequel l'ensemble arbre de commande comprend un arbre de commande creux (31) qui se déplace dans un sens vertical par rapport au bras et un élément strié interne (34, 35) qui est disposé à l'intérieur de l'arbre de commande et retenu dans l'arbre de commande et auquel est relié détachable l'élément strié externe,
dans lequel l'ensemble arbre de commande présente en outre un élément de raccordement (32, 33) attaché à une partie d'extrémité de l'arbre de commande (31) afin de relayer l'élément strié interne et l'élément strié externe et
dans lequel l'élément strié interne comprend un fil interne (34) formé d'un fil électrique et l'élément strié externe comprend un fil externe (34a, 34b) formé d'un fil électrique et relié détachable au fil interne,
**caractérisé en ce que** l'élément de raccordement (32, 33) comprend une bride tubulaire (32a, 33a) prévue au niveau d'une extrémité supérieure ou d'une extrémité inférieure de l'arbre de commande et un connecteur de fil (32b, 33b) qui présente une section de connecteur externe faisant saillie vers l'extérieur de l'arbre de commande et une section de connecteur interne positionnée sur l'intérieur de l'arbre de commande, l'élément de raccordement étant relié à l'arbre de commande en étant vissé ou emmanché par pression, le connecteur de fil étant retenu dans un trou de communication vertical de la bride tubulaire, la section de connecteur externe ou la section de connecteur interne s'étendant au-dessus de la bride tubulaire et l'autre section parmi la section de connecteur externe et la section de connecteur interne s'étendant sous la bride tubulaire, la section de connecteur externe étant reliée au fil externe et la section de connecteur interne étant reliée au fil interne.

2. Robot de type SCARA selon la revendication 1 dans lequel l'élément strié interne comprend un tuyau interne (35) constitué d'un matériau de tuyau et l'élément strié externe comprend un tuyau externe (35a, 35b) constitué d'un matériau de tuyau et relié détachable au tuyau interne,
dans lequel l'élément de raccordement comprend un joint de tuyau (32c, 33c) qui présente une section de joint externe faisant saillie vers l'extérieur de l'arbre de commande et une section de joint interne placée sur l'intérieur de l'arbre de commande, le joint de tuyau étant retenu dans un trou de communication vertical de la bride tubulaire, la section de joint externe ou la section de joint interne s'étendant au-dessus de la bride tubulaire et l'autre section parmi la section de joint externe et la section de joint interne s'étendant sous la bride tubulaire, la section de joint externe étant reliée au tuyau externe et la section de joint interne étant reliée au tuyau interne.

3. Robot de type SCARA selon la revendication 1 ou 2 comportant, en tant qu'élément de raccordement, un élément de raccordement d'extrémité supérieure (32) attaché à une extrémité supérieure de l'arbre de commande.

4. Robot de type SCARA selon l'une quelconque des revendications 1 à 3 comportant, en tant qu'élément de raccordement, un élément de raccordement d'extrémité inférieure attaché à une extrémité inférieure de l'arbre de commande.

5. Robot de type SCARA selon l'une quelconque des revendications 1 à 4, comportant en outre un élément de retenue (53) fixé à l'arbre de commande et qui retient l'élément strié interne ou l'élément strié externe en une position voisine de l'extrémité supérieure de l'arbre de commande.

6. Robot de type SCARA selon la revendication 1
dans lequel l'arbre de commande (61) présente un orifice traversant supérieur (61a) qui est formé sur une surface latérale voisine de l'extrémité supérieure de l'arbre de commande et qui communique avec l'intérieur et l'extérieur de l'arbre de commande et
dans lequel le robot de type SCARA comporte en outre un tuyau continu (65) inséré dans l'arbre de commande à travers l'orifice traversant supérieur et qui s'étend en continu vers le côté inférieur de l'arbre de commande.

7. Robot de type SCARA selon la revendication 1
dans lequel l'arbre de commande (61) présente un orifice traversant inférieur (61b) qui est formé sur une surface latérale voisine de l'extrémité inférieure de l'arbre de commande et qui communique avec l'intérieur et l'extérieur de l'arbre de commande,
le robot de type SCARA comportant en outre un tuyau continu (65) qui est inséré depuis un côté supérieur de l'arbre de commande dans l'arbre de commande, s'étend en continu vers le côté inférieur de l'arbre de commande et est tiré hors de l'orifice traversant inférieur vers l'extérieur de l'arbre de commande.
